# FASCICULE DE BREVET EUROPEEN

(11) **EP 3 079 542 B1**
(45) Date de publication et mention de la délivrance du brevet: **13.09.2017**
(21) Numéro de dépôt: 14828195.9
(22) Date de dépôt: 05.12.2014
(51) Int. Cl.: A47J 43/044, A47J 43/046, A47J 43/06, A47J 43/07, A47J 43/08

(54) **APPAREIL ÉLECTROMENAGER DE PRÉPARATION CULINAIRE COMPORTANT UN BRAS INFÉRIEUR PORTE PAR UN SOCLE ET UN BRAS SUPÉRIEUR RELIÉ AU BRAS INFÉRIEUR PAR UN DISPOSITIF D'ARTICULATION**
HAUSHALTSGERÄT ZUR LEBENSMITTELZUBEREITUNG MIT EINEM UNTEREM ARM AN EINEM SOCKEL UND EINEM OBEREM ARM, DER ÜBER SCHARNIERE MIT DEM UNTEREN ARM VERBUNDEN IST
HOUSEHOLD FOOD PREPARATION APPLIANCE COMPRISING A LOWER ARM BORNE BY A BASE AND AN UPPER ARM CONNECTED TO THE LOWER ARM BY A HINGE MEANS

(30) Priorité: 13.12.2013 FR 1362618
(43) Date de publication de la demande: 19.10.2016
(73) Titulaire: SEB S.A., 69130 Ecully (FR)
(72) Inventeur: BLOND, Laurent, F-21200 Beaune (FR)
(74) Mandataire: Bourrières, Patrice
(86) Numéro de dépôt international: PCT/FR2014/053193
(87) Numéro de publication internationale: WO 2015/086965

(56) Documents cités:
- EP-A1- 0 115 895
- DE-U1- 29 713 859
- FR-A1- 2 462 136
- GB-A- 521 735
- GB-A- 602 353
- US-A- 2 070 768
- US-A- 2 599 275
- US-A- 4 131 034
- US-A1- 2011 122 723

## Description

La présente invention se rapporte au domaine technique général des appareils électroménagers de préparation culinaire comprenant un socle destiné à reposer sur un plan de travail, un bras inférieur porté par le socle et un bras supérieur relié au bras inférieur par un dispositif d'articulation, le bras supérieur comportant au moins un entraineur entrainé en rotation par un moteur et destiné à être accouplé à un accessoire pour le traitement des aliments.

Il est connu, de la demande de brevet US 2 599 275, un appareil électroménager de préparation culinaire comprenant un socle destiné à reposer sur un plan de travail, un bras inférieur relié au socle par une première liaison pivot et un bras supérieur relié au bras inférieur par une deuxième liaison pivot, le bras supérieur comportant deux entraineurs, entrainés en rotation par un moteur, destinés à être accouplés à deux fouets.

Un tel appareil électroménager de préparation culinaire présente l'avantage de pouvoir être utilisé avec un récipient pouvant être utilisé directement pour le service à table. Un tel appareil présente également l'avantage de pouvoir être replié dans une position de rangement dans laquelle les bras supérieur et inférieur s'étendent le long du socle pour une plus grande compacité.

Cependant, la manipulation du bras supérieur articulé d'un tel appareil n'est pas très ergonomique, l'utilisateur ne sachant pas où saisir le boitier moteur pour le manipuler. En particulier, l'utilisateur risque de salir le boitier moteur lors de cette manipulation et le nettoyage du boitier moteur par l'utilisateur peut conduire à l'introduction d'eau au niveau des parties électriques au risque de détériorer ces dernières.

Il est connu, de la demande de brevet DE 297 13 859, un appareil électroménager de préparation culinaire comportant un bras supérieur articulé et une poignée de préhension disposée sur la face avant du bras supérieur. Toutefois, une telle poignée ne procure une bonne ergonomie d'utilisation que lorsque l'utilisateur est disposé en face de l'extrémité avant du bras supérieur.

Aussi, un but de la présente invention est de proposer un appareil électroménager de préparation culinaire remédiant à ces inconvénients, et notamment de proposer un appareil électroménager de préparation culinaire offrant une très bonne ergonomie d'utilisation.

A cet effet, l'invention se rapporte à un appareil électroménager de préparation culinaire comportant un socle destiné à reposer sur un plan de travail, un bras inférieur porté par le socle et un bras supérieur comportant une extrémité arrière reliée au bras inférieur par un dispositif d'articulation, le bras supérieur comportant au moins un entraineur entrainé en rotation par un moteur et destiné à être accouplé à un accessoire pour le traitement des aliments, caractérisé en ce que le bras supérieur comporte une poignée de préhension s'étendant au moins pour partie devant une extrémité avant du bras supérieur.

Une telle caractéristique permet d'offrir une excellente ergonomie dans la manipulation du bras supérieur pour modifier l'agencement de l'appareil. Selon l'invention, la poignée présente une forme d'anse prenant naissance sur les bords latéraux du bras supérieur et s'étendant devant le bras supérieur.

Une telle poignée présente l'avantage d'être accessible sur tout le pourtour du bras supérieur.

Selon une autre caractéristique de l'invention, le dispositif d'articulation permet un pivotement du bras supérieur sur le bras inférieur autour d'un axe X' parallèle au plan de travail, la poignée s'étendant dans un plan parallèle à l'axe X'.

Selon encore une autre caractéristique de l'invention, la poignée s'étend sur au moins un côté du bras supérieur.

Une telle caractéristique permet de rendre la poignée très accessible et très visible. Selon une autre caractéristique de l'invention, le bras inférieur est relié au socle par un premier dispositif d'articulation et le bras supérieur est relié au bras inférieur par un deuxième dispositif d'articulation.

Selon une autre caractéristique de l'invention, les premier et deuxième dispositifs d'articulation comportent des moyens de verrouillage permettant d'immobiliser les bras inférieur et supérieur dans au moins une position prédéterminée.

Une telle caractéristique permet d'immobiliser les bras inférieur et supérieur de l'appareil dans les positions de travail prédéterminées.

Selon une autre caractéristique de l'invention, le premier dispositif d'articulation permet un mouvement de pivotement du bras inférieur sur le socle autour d'un axe Y, dit vertical, perpendiculaire au plan de travail.

Un tel mouvement de pivotement du premier dispositif d'articulation autour d'un axe vertical présente l'avantage de permettre de faire tourner les bras inférieur et supérieur autour de cet axe vertical pour dégager l'accès au socle, et plus particulièrement au récipient de travail reposant sur le socle, pour une plus grande ergonomie d'utilisation.

Selon une autre caractéristique de l'invention, le premier dispositif d'articulation permet une rotation du bras inférieur autour de l'axe vertical Y sur un secteur angulaire supérieur ou égal à 180° et préférentiellement proche de 340°.

Une telle caractéristique présente l'avantage de permettre la rotation du bras inférieur sur 180° pour offrir une nouvelle position de travail à l'appareil.

Selon une autre caractéristique de l'invention, le bras supérieur peut occuper une position repliée, dans laquelle le bras supérieur repose le long du bras inférieur.

Selon une autre caractéristique de l'invention, le bras inférieur comporte une ouverture traversante permettant d'accéder à l'entraineur lorsque le bras supérieur occupe la position repliée.

Une telle caractéristique permet de connecter un accessoire sur l'entraineur porté par le bras supérieur lorsque ce dernier est replié sur le bras inférieur, permettant un agencement différent de l'appareil en fonctionnement.

Selon une autre caractéristique de l'invention, le bras inférieur et le bras supérieur peuvent occuper une position de travail en équerre dans laquelle le bras inférieur est disposé sensiblement verticalement et le bras supérieur est disposé sensiblement perpendiculairement au bras inférieur et au moins une position de travail verticale dans laquelle le bras inférieur est disposé sensiblement verticalement et le bras supérieur occupe la position repliée.

Une telle caractéristique permet à l'appareil d'offrir deux positions de travail distinctes, chaque position de travail étant optimisée pour un fonctionnement avec un type d'accessoire donné. Ainsi, la position de travail en équerre présente l'avantage de procurer une bonne ergonomie d'utilisation lors de l'utilisation de l'appareil avec un accessoire de type outil de pétrissage ou de malaxage venant plonger directement dans une cuve disposée sur le socle. La position de travail verticale procure quant à elle une meilleure ergonomie d'utilisation lors de l'utilisation de l'appareil avec un accessoire muni d'une goulotte pour l'introduction des aliments et d'une sortie rejetant directement les aliments traités dans une assiette disposée sur le socle.

Selon une autre caractéristique de l'invention, l'appareil comporte un boitier amovible, réducteur de vitesse, comprenant un arbre d'entrée venant s'accoupler sur l'entraineur lorsque le bras supérieur occupe la position de travail verticale.

Une telle caractéristique permet d'obtenir une faible vitesse de rotation adaptée pour l'utilisation d'un accessoire pour râper ou pour hacher les aliments.

Selon une autre caractéristique de l'invention, le moteur est disposé dans le bras supérieur, de préférence transversalement à ce dernier.

Une telle caractéristique permet de disposer le moteur au plus près de l'entraineur, évitant ainsi l'utilisation d'un dispositif coûteux de transmission de mouvement.

L'épaisseur des bras inférieur et supérieur sera avantageusement dimensionnée de telle sorte que l'épaisseur totale des bras supérieur et inférieur en position repliée corresponde sensiblement à la longueur du moteur disposé en position transversale, pour une plus grande compacité de l'appareil en position repliée.

De manière préférentielle, le moteur est un moteur à courant continu.

Selon une autre caractéristique de l'invention, le bras supérieur comporte un premier entraineur débouchant sur une face inférieure du bras supérieur et un second entraineur débouchant sur une face supérieure du bras supérieur.

Selon une autre caractéristique de l'invention, le premier entraineur est entrainé par le moteur au travers d'un réducteur de vitesse, le second entraineur étant en prise directe avec un arbre de sortie du moteur.

Une telle caractéristique permet d'avoir deux entraineurs distincts dont la vitesse et l'emplacement sont optimisés pour fonctionner avec certains types d'accessoires pour obtenir à la fois de très bonnes performances et une très bonne ergonomie d'utilisation.

Selon une autre caractéristique de l'invention, le moteur est alimenté électriquement par un cordon d'alimentation pénétrant dans l'appareil au niveau du socle et s'étendant à l'intérieur du bras inférieur et du bras supérieur, les bras inférieur et supérieur comportant une structure creuse.

Une telle caractéristique permet de limiter la gêne du cordon d'alimentation lors de la manipulation des bras supérieur et inférieur de l'appareil, le cordon ne venant pas s'enrouler autour des bras.

Selon une autre caractéristique de l'invention, le premier dispositif d'articulation permet un mouvement de pivotement du bras inférieur sur le socle autour d'un axe X, dit horizontal, parallèle au plan de travail.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention ;
- la figure 2 est une vue en perspective de l'appareil de la figure 1 avec le premier dispositif d'articulation représenté partiellement éclaté ;
- la figure 3 est une vue de détail, en perspective partiellement éclatée, du premier dispositif d'articulation reliant le socle au bras inférieur ;
- les figures 4 et 5 sont des vues en perspective de l'appareil avec le deuxième dispositif d'articulation représenté partiellement éclaté ;
- la figure 6 est une vue en perspective, partiellement éclatée, d'une partie du système de verrouillage du deuxième dispositif d'articulation ;
- la figure 7 est une vue en coupe longitudinale de l'appareil dans une position de rangement ;
- la figure 8 est une vue de côté de l'appareil de la figure 1 avec le bras en position relevée ;
- la figure 9 est une vue en coupe longitudinale de l'appareil selon la ligne IX-IX de la figure 8 ;
- la figure 10 est une vue en perspective de l'appareil de la figure 1 dans une position de travail en équerre dans laquelle le bras supérieur est équipé de crochets de pétrissage, et d'une cuve fixée sur le socle ;
- la figure 11 est une vue en perspective partiellement éclatée de l'adaptateur assurant l'entrainement des crochets de pétrissage de la figure 10 ;
- la figure 12 est une en perspective de l'appareil de la figure 1 équipé d'un fouet, l'appareil étant représenté avec le bras supérieur en position relevée et le bras inférieur pivoté de l'ordre de 90° sur le socle ;
- la figure 13 est une vue en perspective de l'appareil de la figure 1 dans une position de travail verticale ;
- la figure 14 est une vue de l'appareil de la figure 1 dans la position de travail verticale et équipé d'un boitier réducteur de vitesse ;
- les figures 15 et 16 sont des vues en perspective de l'appareil de la figure 13 accouplé respectivement à un accessoire pour râper les aliments et à un accessoire hachoir ;
- la figure 17 est une vue en perspective partiellement éclatée du boitier réducteur de vitesse ;
- les figures 18 et 19 sont respectivement des vues en perspective et de côté de l'appareil dans une position de travail horizontale, cette position de travail correspondant également à la position de rangement ;
- la figure 20 est une vue en perspective de l'appareil dans la position de travail horizontale accouplé avec un bol de mixage.

Seuls les éléments nécessaires à la compréhension de l'invention ont été représentés. Pour faciliter la lecture des dessins, les mêmes éléments portent les mêmes références d'une figure à l'autre.

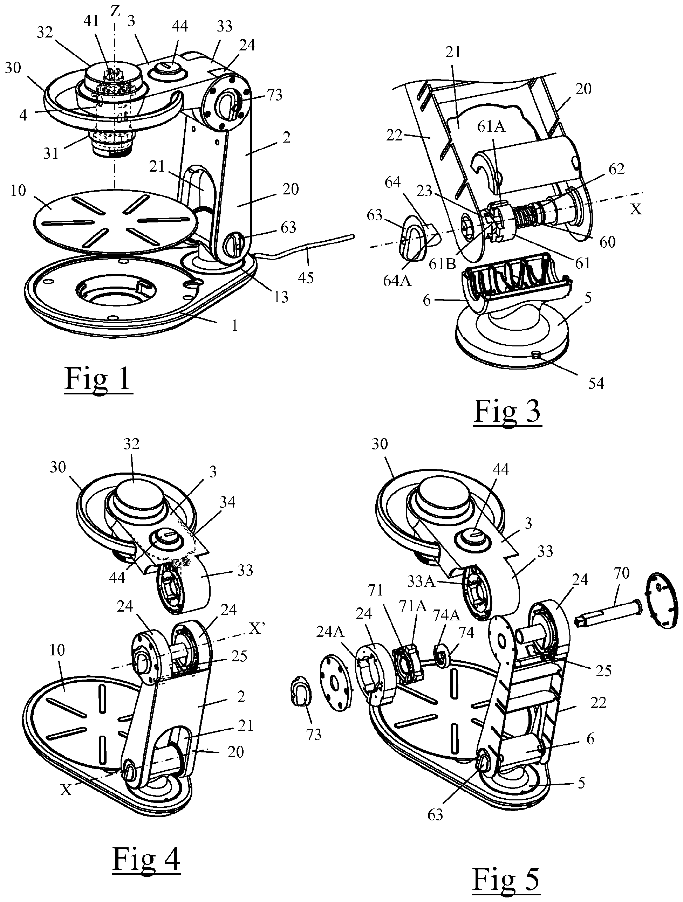

La figure 1 représente un appareil électroménager de préparation culinaire comprenant un socle 1 destiné à reposer à plat sur un plan de travail, le socle 1 comprenant un plateau 10 amovible, circulaire, muni d'un revêtement antidérapant, tel un revêtement silicone, sur lequel peut être disposé un récipient de travail.

Conformément à cette figure, l'appareil comporte un bras inférieur 2, sensiblement rectiligne, relié au socle 1 par un premier dispositif d'articulation et comprend un bras supérieur 3, sensiblement rectiligne, comprenant une extrémité arrière reliée au bras inférieur 2 par un deuxième dispositif d'articulation.

De manière préférentielle, le bras supérieur 3 comporte une extrémité avant, libre, entourée d'une poignée 30 de préhension en forme d'anse annulaire prenant naissance sur les bords latéraux du bras supérieur 3 et passant devant l'extrémité libre du bras supérieur 3 en s'étendant dans le plan du bras supérieur 3.

A titre d'exemple, le bras inférieur 2 présente une longueur de l'ordre de 32 cm et le bras supérieur 3 présente une longueur de l'ordre de 28 cm, la poignée 30 de préhension présentant un diamètre de l'ordre de 20 cm et étant positionnée sur le bras supérieur 3 de telle sorte que la longueur hors tout du bras supérieur 3 muni de la poignée 30 corresponde sensiblement à la longueur du bras inférieur 2.

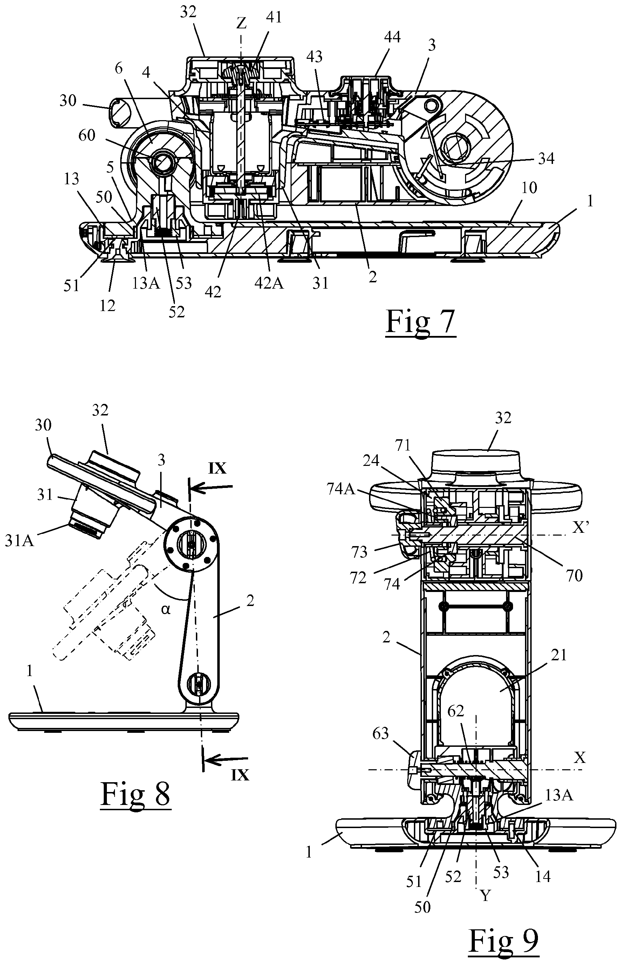

Conformément à la figure 7, le bras supérieur 3 comporte une structure creuse qui renferme, à proximité de son extrémité libre, un moteur 4 représenté en pointillé sur la figure 1, le moteur 4 s'étendant selon un axe Z transversal à l'axe longitudinal du bras supérieur 3 et étant disposé dans un logement 31 formant une excroissance sur une face inférieure du bras supérieur 3.

De manière préférentielle, le moteur 4 comporte un arbre de sortie comprenant une extrémité supérieure qui est reliée directement à un entraineur 41 à haute vitesse débouchant sur une face supérieure du bras supérieur 3, cet entraineur 41 étant masqué par un couvercle de protection 32 amovible, visible sur la figure 1. L'arbre de sortie du moteur 4 comprend également une extrémité inférieure reliée à un entraineur 42 à vitesse réduite, visible notamment sur la figure 7, débouchant à l'extrémité inférieure du logement 31, cet entraineur 42 tournant également autour de l'axe Z du moteur 4 et étant relié à l'arbre de sortie du moteur 4 par l'intermédiaire d'un réducteur de vitesse 42A, de type à train épicycloïdal.

A titre d'exemple, le moteur 4 est un moteur à courant continu, tel qu'un moteur de la série 900 commercialisé par la société Johnson, et sa vitesse de rotation nominale est de l'ordre de 11 000 tr/min, le réducteur de vitesse 42A étant dimensionné pour que la vitesse de l'entraineur 42 soit de l'ordre de 1500 tr/min lorsque le moteur tourne à 11 000 tr/min.

Le moteur 4 est piloté, de manière connue en soi, par une carte de commande 43 de type carte à thyristors, visible sur la figure 7, disposée dans le bras supérieur 3, la carte de commande 43 étant reliée à un bouton de commande 44 disposé sur la face supérieure du bras supérieur 3, permettant de piloter le fonctionnement du moteur 4.

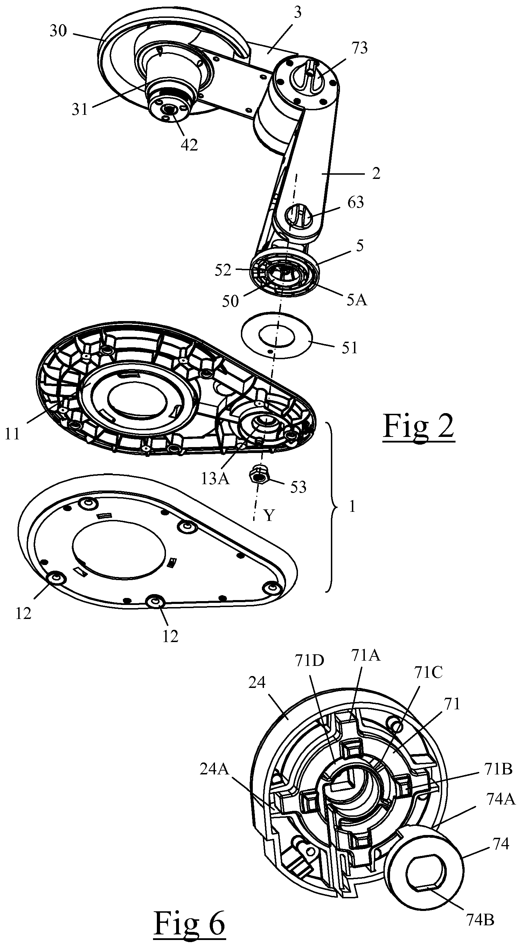

Comme on peut le voir sur la figure 2, le socle 1 comprend une face inférieure munie de plusieurs ventouses 12 permettant au socle 1 d'adhérer fermement au plan de travail et comporte un lest 11, avantageusement de l'ordre de 1 kg, assurant la stabilité à l'appareil quelque soit la position des bras supérieur 3 et inférieur 2.

Le premier dispositif d'articulation, reliant le socle 1 au bras inférieur 2, comporte une embase 5 circulaire montée rotative dans un logement 13 du socle autour d'un axe Y, dit vertical, s'étendant perpendiculairement au plan du socle 1, l'embase 5 comportant une bague de guidage 50 assurant le glissement entre l'embase 5 et un cône central 13A de guidage ménagé dans le fond du logement 13, une plaque de glissement 51 étant avantageusement interposée entre l'embase 5 et le socle 1.

L'embase 5 circulaire est rendue solidaire du socle 1 par une vis creuse 52, mieux visible sur la figure 9, sur laquelle vient s'engager un écrou 53 intégré dans le socle 1, la vis creuse 52 comportant un orifice central permettant le passage d'un cordon 45 d'alimentation du moteur 4, représenté uniquement sur la figure 1, pénétrant dans le socle 1 et s'étendant à l'intérieur du bras inférieur 2 et du bras supérieur 3 pour rejoindre la carte de commande 43 du moteur 4.

De manière préférentielle, des moyens butés, avantageusement constitués par un doigt 14 porté par le socle 1 et s'engageant dans une rainure 5A ménagée sur la face inférieure de l'embase 5 circulaire, limitent la rotation de l'embase 5 à un secteur angulaire de l'ordre de 340° afin de limiter les contraintes de torsion sur le cordon 45 d'alimentation.

Conformément aux figures 3 et 9, le bras inférieur 2 comporte une extrémité inférieure en forme de U comprenant deux branches 20 venant s'engager de part et d'autre d'un fût 6 cylindrique supporté par l'embase 5 en ménageant au dessus de ce fût 6 une ouverture traversante 21, le fût 6 renfermant un arbre 60 sur lequel une armature 22 métallique, intégrée dans la structure creuse du bras inférieur 2, est montée pivotante permettant au bras inférieur 2 de tourner autour d'un axe X, dit horizontal, parallèle au plan du socle 1.

La rotation du bras inférieur 2 autour de l'arbre 60 est préférentiellement bloquée dans deux positions prédéterminées par un système de verrouillage comportant un crabot baladeur 61 qui est mobile en translation sur l'arbre 60, le crabot baladeur 61 étant bloqué en rotation dans le fût 6 cylindrique par l'engagement de nervures axiales portées par le fût 6 cylindrique, non visibles sur les figures, dans des rainures axiales 61A portées par le crabot baladeur 61.

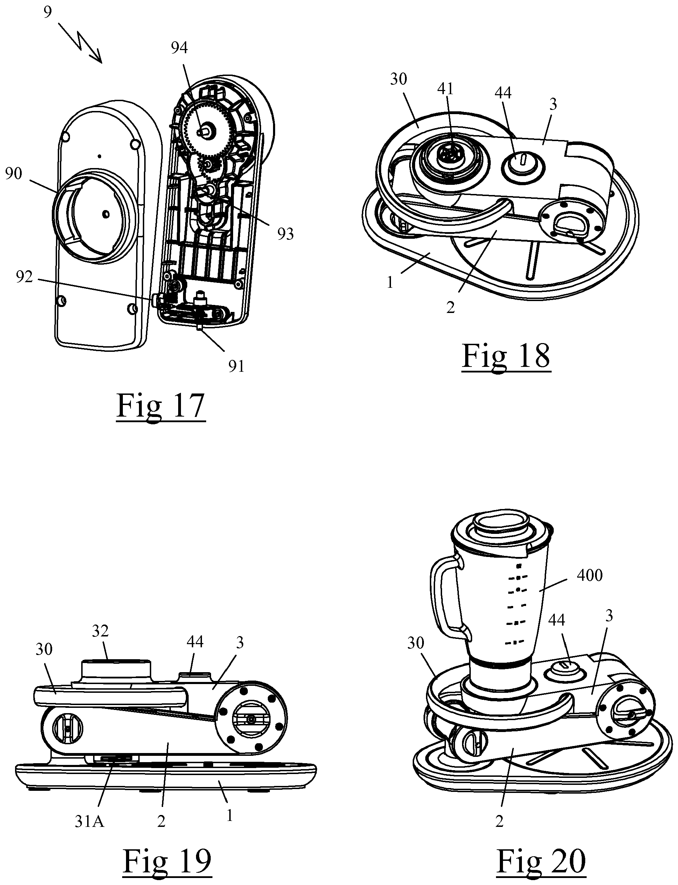

Le crabot baladeur 61 est ramené par un ressort de rappel 62 contre une bague 23 crantée solidaire de l'armature 22 du bras inférieur, la bague 23 comportant quatre crans répartis à 90° les uns de autres et adaptés pour recevoir quatre dents du crabot baladeur 61 lorsque ce dernier occupe une position verticale, illustrée notamment sur les figures 1 et 8, dans laquelle le bras inférieur 2 est disposé sensiblement perpendiculairement au plan du socle 1, et lorsqu'il occupe une position sensiblement horizontale, illustrée notamment sur les figures 18 et 19, dans laquelle le bras inférieur 2 s'étend le long du socle 1, l'engagement des dents du crabot baladeur 61 dans les crans de la bague 23 permettant d'immobiliser automatiquement le bras inférieur 2 dans ces deux positions.

Comme on peut le voir sur la figure 3, le système de verrouillage comporte un bouton 63 de déverrouillage disposé sur une face latérale du bras inférieur 2, à l'extrémité axiale de l'arbre 60, le bouton 63 de déverrouillage comprenant un manchon 64 s'engageant autour de l'arbre 60 et comprenant une extrémité biseautée formant une came d'actionnement 64A venant coopérer avec un chemin de came 61B de forme complémentaire porté par le crabot baladeur 61 pour repousser ce dernier à l'encontre du ressort de rappel 62 et faire sortir les dents du crabot baladeur 61 des crans de la bague 23 lorsque le bouton 63 est tourné de 90° dans un sens.

Conformément aux figures 4 et 5, le deuxième dispositif d'articulation reliant le bras inférieur 2 au bras supérieur 3 comporte un arbre 70 s'étendant parallèlement à l'arbre 60 du premier dispositif d'articulation, cet arbre 70 étant porté par deux supports 24 circulaires formés à l'extrémité supérieure du bras inférieur 2, ces deux supports 24 ménageant entre eux un espace dans lequel vient s'engager un tronçon 33 circulaire de forme complémentaire formé à l'extrémité postérieure du bras supérieur 3 pour réaliser une liaison de type charnière autorisant un pivotement du bras supérieur autour d'un axe X' parallèle à l'axe X.

De manière préférentielle, les deux supports 24 circulaires présentent un diamètre correspondant au double de l'épaisseur, en vue de profil, des bras inférieur 2 et supérieur 3 au niveau de leur jonction avec les supports 24 circulaires, le bras inférieur 2 présentant avantageusement une épaisseur se réduisant progressivement du premier dispositif d'articulation vers les supports 24 circulaires et le bras supérieur 3 présentant avantageusement une épaisseur se réduisant progressivement du deuxième dispositif d'articulation vers l'extrémité libre du bras supérieur 3 de sorte que, lorsque les bras supérieur 3 et inférieur 2 sont superposés, comme illustré sur la figure 19, ils forment un bloc compact présentant deux faces externes parallèles venant dans le prolongement du bord périphérique des supports 24 circulaires.

Le bras supérieur 3 comporte avantageusement un ressort de rappel 34, illustré en pointillé sur la figure 4, comportant une extrémité prenant appui sur une butée 25 portée par le bras inférieur 2 pour générer une force tendant à écarter le bras supérieur 3 du bras inférieur 2 lorsque le bras supérieur 3 est replié sur le bras inférieur 2, la butée 25 étant avantageusement positionnée de telle sorte que l'effort généré par le ressort de rappel 34 amène automatiquement le bras supérieur 3 dans une position de repos dans laquelle il fait un angle α de l'ordre de 45° par rapport au bras inférieur 2, tel qu'illustré en trait mixte sur la figure 8, l'utilisateur devant ensuite saisir manuellement le bras supérieur 3 pour ouvrir davantage l'angle α, l'extrémité du ressort de rappel 34 n'étant alors plus en contact avec la butée 25.

De manière préférentielle, le bras inférieur 2 comporte également une seconde butée, non visible sur les figures, contre laquelle l'extrémité du ressort de rappel 34 vient prendre appui lorsque l'ouverture du bras supérieur 3 atteint 115°, position illustrée en trait plein sur la figure 8, de manière à générer un effort venant freiner l'ouverture du bras supérieur 3, sans la bloquer, lorsque l'utilisateur exerce une traction vers le haut sur la poignée 30 pour ouvrir le bras supérieur 3 au-delà de l'ouverture à 115°.

Conformément à la figure 5, le deuxième dispositif d'articulation comporte un système de verrouillage du bras supérieur 3 agissant au niveau de l'un des supports 24 circulaires, ce système de verrouillage comportant un crabot baladeur 71 qui est mobile en translation sur l'arbre 70 et coulisse dans la pièce support 24 en étant bloqué en rotation dans cette dernière par l'engagement de quatre doigts radiaux 71A dans des rainures 24A adaptées de la pièce support 24.

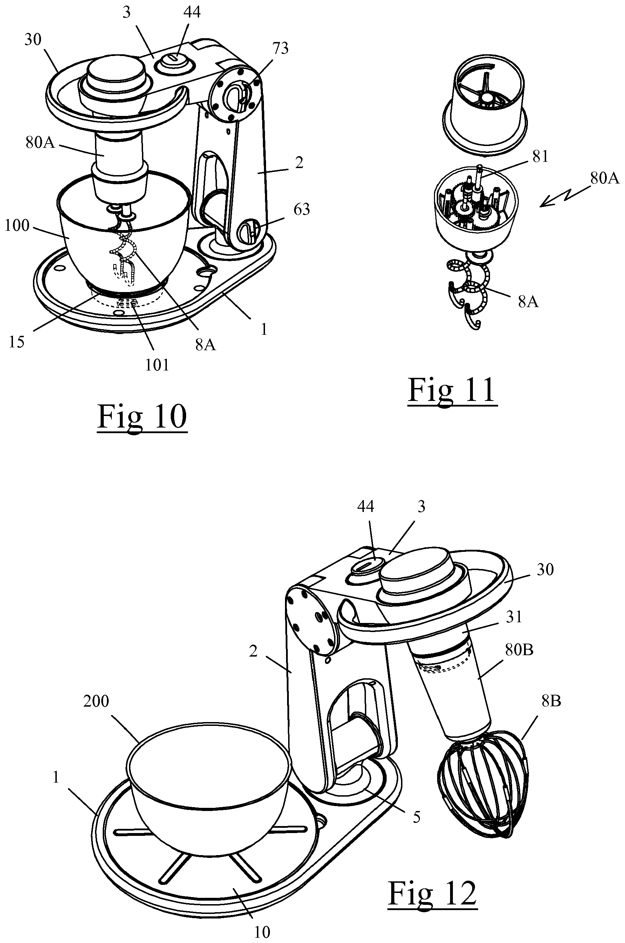

Le crabot baladeur 71 est amené par un ressort de rappel 72, visible uniquement sur la figure 9, contre une face latérale du tronçon 33 circulaire du bras supérieur 3, le crabot baladeur 71 comportant quatre ergots 71B, répartis à 90° les uns des autres, venant s'engager dans quatre empreintes 33A ménagées sur la face latérale du tronçon 33 pour assurer le blocage en rotation du bras supérieur 3 lorsque le bras supérieur 3 est disposé perpendiculairement au bras inférieur 2, ainsi que cela est illustré notamment sur les figures 1 et 10, et lorsque le bras supérieur s'étend le long du bras inférieur 2, ainsi que cela est illustré notamment sur les figures 18, 19 et 20.

Le système de verrouillage comporte un bouton 73 de déverrouillage disposé sur une face latérale du bras inférieur 2 et solidaire en rotation de l'arbre 70 en étant engagé sur une partie de section carrée disposée à l'extrémité axiale de l'arbre 70. Le système de déverrouillage comporte également une bague 74 de déverrouillage disposée sur l'arbre 70 entre le crabot baladeur 71 et le tronçon 33 circulaire du bras supérieur 3.

Conformément à la figure 6, cette bague 74 rendue solidaire en rotation de l'arbre 70 par des méplats 74B vient s'insérer dans une cavité ménagée au niveau de la périphérie interne du crabot baladeur 71 et comporte une came d'actionnement 74A venant coopérer avec un bord 71C d'une lumière 71D ménagée dans le crabot baladeur 71 pour repousser ce dernier à l'encontre du ressort de rappel 72 lorsque le bouton 73 est tourné dans le sens horaire de manière à faire sortir les ergots 71B des empreintes 33A et permettre la libre rotation du bras supérieur 3.

Les premier et deuxième dispositifs d'articulation ainsi réalisés permettent d'immobiliser les bras inférieur 2 et supérieur 3 dans une première position de travail, dite en équerre, illustrée sur la figure 1, dans laquelle le bras inférieur 2 est disposé sensiblement perpendiculairement au socle 1 et le bras supérieur 3 s'étend au dessus du socle 1 en étant disposé sensiblement parallèlement à ce dernier.

Une telle position de travail est particulièrement adaptée pour l'utilisation de l'appareil avec un accessoire pour malaxer les aliments ou avec un accessoire pour émulsionner une préparation disposée dans une cuve reposant sur le socle 1.

Ainsi, la figure 10 illustre l'utilisation de l'appareil accouplé avec un accessoire de pétrissage comportant deux crochets 8A de pétrissage pour la réalisation de pâte. Lors de l'utilisation des crochets 8A de pétrissage, le plateau 10 amovible est préférentiellement retiré du socle 1 et une cuve 100 dédiée à la fonction pétrissage est disposée sur le socle 1.

Cette cuve 100 comporte une embase cylindrique venant s'engager dans une cavité 15 adaptée, ménagée dans le socle 1 sous le plateau 10 amovible, l'embase cylindrique comportant des ergots de verrouillage 101 venant coopérer avec des nervures, non visibles, ménagées en bordure de la cavité 15 pour réaliser une liaison de type baïonnette et assurer l'immobilisation de la cuve 100 sur le socle 1.

Les crochets 8A de pétrissage sont entrainés au travers d'un adaptateur 80A venant s'engager sur un manchon d'accouplement 31A entourant l'entraineur 42 à vitesse réduite, la hauteur des crochets 8A et de l'adaptateur 80A étant adaptée pour que l'extrémité inférieure des crochets 8A parvienne à proximité immédiate du fond de la cuve 100 lorsque l'appareil occupe la position de travail en équerre.

L'adaptateur 80A, illustré isolément sur la figure 11, referme un arbre 81 venant s'accoupler avec l'entraineur 42 et un train d'engrenages permettant d'entrainer les deux crochets 8A en sens contraire à une vitesse de l'ordre de 200 à 250 tr/min lors de la rotation de l'entraineur 42 à une vitesse de l'ordre de 1500 tr/min.

Lorsque l'utilisateur a terminé sa préparation, il arrête le moteur 4 à l'aide du bouton de commande 44, puis déverrouille d'une main le bras supérieur 3 en faisant tourner le bouton 73 et saisit la poignée 30 pour relever le bras supérieur 3 de manière à sortir les crochets 8A de pétrissage de la cuve 100 et à faire pivoter les bras inférieur 2 et supérieur 3 autour de l'axe vertical Y du premier dispositif d'articulation de manière à dégager l'accès à la cuve 100.

Un tel mouvement des bras inférieur 2 et supérieur 3 pour dégager l'accès au socle 1 est par exemple illustré sur la figure 12, où l'appareil est accouplé à un accessoire pour la réalisation d'émulsion comportant un fouet 8B à brins flexibles, tel que décrit dans la demande de brevet FR 2 971 689 déposée par la demanderesse.

Dans cette configuration de l'appareil, le fouet 8B est entrainé directement à la vitesse de l'entraineur 42 à vitesse réduite et comporte une douille 80B venant s'accoupler au manchon d'accouplement 31A entourant l'entraineur 42.

Ce fouet 8B est préférentiellement utilisé avec un récipient 200, de type saladier, qui est posé librement sur le plateau 10, ce dernier étant rapporté sur le socle 1 pour masquer la cavité 15, le revêtement antidérapant du plateau 10 assurant une stabilisation du récipient 200 sur le socle 1.

La longueur de la douille 80B est dimensionnée de telle sorte que l'extrémité inférieure des brins souples du fouet 8B vienne toucher le fond du récipient 200 disposé sur le socle 1 lorsque les bras supérieur 3 et inférieur 2 de l'appareil occupent la position de travail en équerre, l'utilisateur pouvant toujours, si nécessaire, déplacer manuellement le récipient 200 pour amener le fouet 8B dans les éventuelles zones du récipient 200 où l'émulsion des ingrédients n'est pas correctement réalisée.

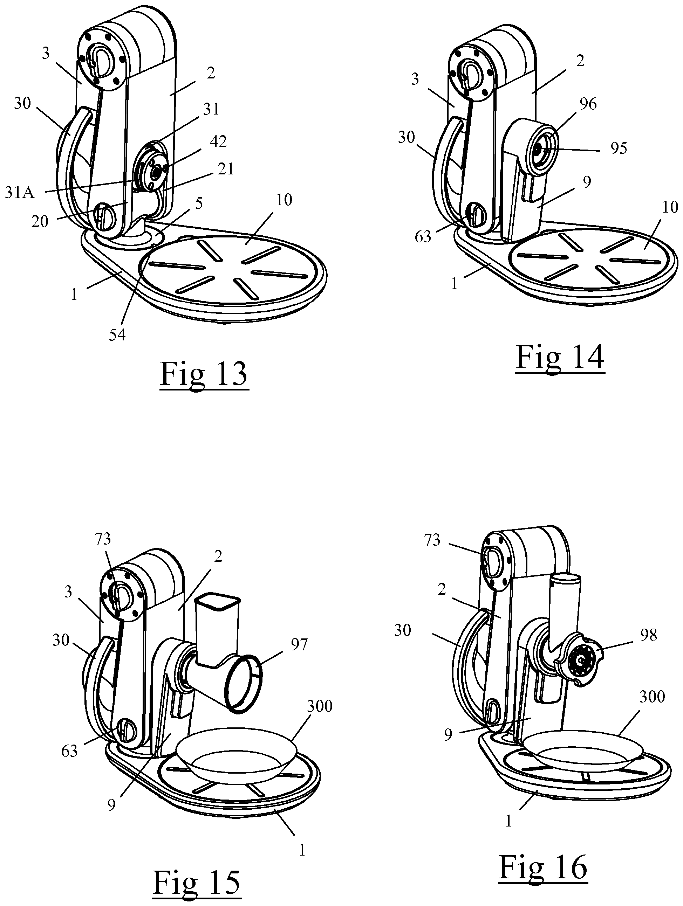

La figure 13 illustre l'appareil dans une deuxième position de travail, dite verticale, dans laquelle le bras inférieur 2 est disposé verticalement et l'embase 5 circulaire est tournée de 180° autour de son axe vertical Y, le bras supérieur 3 étant replié le long du bras inférieur 2 de manière à former un angle a nul avec ce dernier.

Dans cette position de travail verticale, le logement 31 renfermant le moteur 4 est engagé dans l'ouverture traversante 21 ménagée entre les branches 20 du bras inférieur 2 et l'entraineur 42 à vitesse réduite débouche vers le plateau 10 du socle 1.

Comme cela est illustré sur la figure 14, cette position de travail verticale permet l'accouplement d'un boitier 9 réducteur de vitesse à l'entraineur 42 du bras supérieur 3, ce boitier 9, illustré isolément sur la figure 17, comportant une bague 90 qui vient s'accoupler par rotation d'un quart de tour sur le manchon d'accouplement 31A entourant l'entraineur 42 pour occuper une position verticale dans laquelle le bord inférieur du boitier 9 vient jouxter le socle 1.

De manière avantageuse, le bord inférieur du boitier 9 comprend un doigt de verrouillage 91 venant s'insérer automatiquement dans un orifice 54, visible sur la figure 13, ménagé dans l'embase 5 circulaire pour verrouiller le boitier 9 en position, un bouton de déverrouillage 92 étant prévu sur le boitier 9 pour ramener le doigt de verrouillage 91 vers l'intérieur du boitier 9 et permettre le désaccouplement du boitier 9 réducteur de vitesse.

Comme on peut le voir sur la figure 17, le boitier 9 comporte un arbre d'entrée 93 venant s'accoupler avec l'entraineur 42 et un arbre de sortie 94 supportant un entraineur basse vitesse 95, visible sur la figure 14, relié à l'arbre d'entrée 93 par un train d'engrenages permettant d'abaisser la vitesse de rotation de l'arbre de sortie 94 à 200 tr/min lorsque l'arbre d'entrée 93 tourne à 1500 tr/min.

Conformément aux figures 14 à 16, le boitier 9 réducteur de vitesse comporte une douille d'accouplement 96 autour de l'entraineur basse vitesse 95 sur lequel peut être connecté par une liaison, de type quart de tour, un accessoire 97, 98 muni d'une goulotte pour l'introduction des aliments, de type tête pour râper les aliments 97 ou tête hachoir 98, une assiette 300 pouvant être disposée sur le plateau 10 du socle 1 pour recevoir les aliments issus directement de l'accessoire 97, 98.

Une telle disposition des bras inférieur 2 et supérieur 3 dans la position de travail verticale permet donc la réalisation des fonctions hacher ou râper avec une très bonne ergonomie d'utilisation, la goulotte d'introduction des aliments présentant l'avantage de rester à une hauteur relativement faible par rapport au socle 1 permettant à l'utilisateur d'avoir une bonne vision sur l'intérieur de la goulotte et de pouvoir exercer sans difficulté une pression sur les aliments présents dans la goulotte. De plus, dans cette position de travail verticale, le boitier 9 réducteur de vitesse présente l'avantage d'être en appui sur le socle 1 ce qui permet de ne pas exercer d'efforts importants sur les bras inférieur 2 et supérieur 3 lorsque l'utilisateur exerce une pression sur l'aliment disposé dans la goulotte.

Conformément aux figures 18 et 19, l'appareil peut également occuper une troisième position de travail, dite horizontale, dans laquelle le bras inférieur 2 s'étend parallèlement au socle 1 et le bras supérieur 3 est replié sur bras inférieur 2 de telle sorte que l'entraineur 41 à haute vitesse soit disposé au sommet de l'appareil.

Dans cette position de l'appareil, un récipient de mixage 400 peut être accouplé sur le sommet du bras supérieur 3, ainsi que cela est illustré sur la figure 20, le récipient de mixage 400 renfermant un outil rotatif venant s'accoupler directement à l'entraineur 41 pour être entrainé à haute vitesse. Lors de cette utilisation de l'appareil avec le récipient de mixage 400, la position repliée des bras supérieur 3 et inférieur 2 le long du socle 1 présente l'avantage de permettre l'obtention d'un appareil de faible hauteur, de l'ordre de 15 cm entre la face inférieur du socle 1 et la face supérieur du bras supérieur 3, de sorte que le sommet du récipient de mixage 400 reste facilement accessible et son contenu reste dans le champ visuel de l'utilisateur pour une plus grande ergonomie d'utilisation.

Cette position de travail horizontale présente également l'avantage de correspondre à une position de rangement de l'appareil dans laquelle l'encombrement de l'appareil est minimisé et présente une grande compacité lui permettant par exemple d'être disposé dans un tiroir.

L'appareil multifonctions ainsi réalisé présente donc l'avantage de procurer une très bonne ergonomie d'utilisation, les dispositifs d'articulation des bras inférieur et supérieur permettant aux bras de l'appareil d'occuper une position de travail adaptée et optimisée en fonction de l'accessoire utilisé.

En particulier, la présence d'une poignée telle que celle revendiquée à la revendication 1 à l'extrémité du bras supérieur présente l'avantage de faciliter grandement la manipulation des bras supérieur et inférieur, et notamment leur déplacement d'une position à une autre, pour une plus grande ergonomie d'utilisation de l'appareil. La présence d'une telle poignée permet également d'éviter de salir le corps du bras supérieur lors de la manipulation de l'appareil. De plus, la poignée présente l'avantage de pouvoir être facilement nettoyée et ceci sans risque d'introduction d'humidité dans le corps du bras supérieur.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel qu'il est défini dans les revendications. Ainsi, dans une variante de réalisation, l'appareil pourra comporter des dispositifs de sécurité interdisant le fonctionnement du moteur lorsque les bras inférieur et supérieur n'occupent pas l'une des positions de travail de l'appareil. Ainsi, dans une autre variante de réalisation, les systèmes de verrouillage des bras inférieur et supérieur pourront assurer l'immobilisation des bras inférieur et supérieur dans davantage de positions.

## Revendications

1. Appareil électroménager de préparation culinaire comportant un socle (1) destiné à reposer sur un plan de travail, un bras inférieur (2) porté par le socle (1) et un bras supérieur (3) comportant un extrémité arrière reliée au bras inférieur (2) par un dispositif d'articulation, le bras supérieur (3) comportant au moins un entraineur (42) entrainé en rotation par un moteur (4) et destiné à être accouplé à un accessoire pour le traitement des aliments, le bras supérieur (3) comporte une poignée (30) de préhension s'étendant au moins pour partie devant une extrémité avant du bras supérieur (3). **caractérisé en ce que** la poignée (30) présente une forme d'anse prenant naissance sur les bords latéraux du bras supérieur (3) et s'étendant devant le bras supérieur (3).

2. Appareil électroménager de préparation culinaire selon la revendication 1, **caractérisé en ce que** ledit dispositif d'articulation permet un pivotement du bras supérieur (3) sur le bras inférieur (2) autour d'un axe X' parallèle au plan de travail et **en ce que** la poignée (30) s'étend dans un plan parallèle à l'axe X'.

3. Appareil électroménager de préparation culinaire selon l'une quelconque des revendications 1 à 2, **caractérisé en ce que** la poignée (30) s'étend sur au moins un côté du bras supérieur (3).

4. Appareil électroménager de préparation culinaire selon l'une quelconque des revendications 1 à 3, **caractérisé en ce que** le bras inférieur (2) est relié au socle (1) par un premier dispositif d'articulation et le bras supérieur (3) est relié au bras inférieur (2) par un deuxième dispositif d'articulation.

5. Appareil électroménager de préparation culinaire selon la revendication 4, **caractérisé en ce que** les premier et deuxième dispositifs d'articulation comportent des moyens de verrouillage permettant d'immobiliser les bras inférieur (2) et supérieur (3) dans au moins une position prédéterminée.

6. Appareil électroménager de préparation culinaire selon l'une quelconque des revendications 4 à 5, **caractérisé en ce que** ledit premier dispositif d'articulation permet un mouvement de pivotement du bras inférieur (2) sur le socle (1) autour d'un axe Y, dit vertical, perpendiculaire au plan de travail.

7. Appareil électroménager de préparation culinaire selon l'une quelconque des revendications 1 à 6, **caractérisé en ce que** le bras supérieur (3) peut occuper une position repliée, dans laquelle le bras supérieur (3) repose le long du bras inférieur (2).

8. Appareil électroménager de préparation culinaire selon la revendication 7, **caractérisé en ce que** le bras inférieur (2) comporte une ouverture traversante (21) permettant d'accéder à l'entraineur (42) lorsque le bras supérieur (3) occupe la position repliée.

9. Appareil électroménager de préparation culinaire selon l'une quelconque des revendications 7 à 8, **caractérisé en ce que** le bras inférieur (2) et le bras supérieur (3) peuvent occuper une position de travail en équerre dans laquelle le bras inférieur (2) est disposé sensiblement verticalement et le bras supérieur (3) est disposé sensiblement perpendiculairement au bras inférieur (2) et au moins une position de travail verticale dans laquelle le bras inférieur (2) est disposé sensiblement verticalement et le bras supérieur (3) occupe la position repliée.

10. Appareil électroménager de préparation culinaire selon la revendication 9, **caractérisé en ce qu'**il comporte un boitier (9) amovible, réducteur de vitesse, comprenant un arbre d'entrée (93) venant s'accoupler sur l'entraineur (42) lorsque le bras supérieur (3) occupe la position de travail verticale.

11. Appareil électroménager de préparation culinaire selon l'une quelconque des revendications 1 à 10, **caractérisé en ce que** le moteur (4) est disposé dans le bras supérieur (3), de préférence transversalement à ce dernier.

12. Appareil électroménager de préparation culinaire selon la revendication 11, **caractérisé en ce que** le bras supérieur (3) comporte un premier entraineur (42) débouchant sur une face inférieure du bras supérieur (3) et un second entraineur (41) débouchant sur une face supérieure du bras supérieur (3).

13. Appareil électroménager de préparation culinaire selon la revendication 12, **caractérisé en ce que** le premier entraineur (42) est entrainé par le moteur (4) au travers d'un réducteur de vitesse, le second entraineur (41) étant en prise directe avec un arbre de sortie du moteur (4).

## Patentansprüche

1. Elektrisches Haushaltsgerät zur kulinarischen Zubereitung, das eine Basis (1), die dazu bestimmt ist auf einer Arbeitsfläche zu ruhen, einen unteren Arm (2), der von der Basis (1) getragen wird, und einen oberen Arm (3) umfasst, der ein hinteres Ende aufweist, das mit dem unteren Arm (2) durch eine Gelenkvorrichtung verbunden ist, wobei der obere Arm (3) mindestens einen Antrieb (42) umfasst, der von einem Motor (4) in Rotation angetrieben wird, und dazu bestimmt ist, mit einem Zubehörteil für die Verarbeitung von Nahrungsmitteln gekoppelt zu werden, wobei der obere Arm (3) einen Handgriff (30) zum Greifen erfasst, der sich zumindest teilweise vor einem vorderen Ende des oberen Armes (3) erstreckt, **dadurch gekennzeichnet, dass** der Handgriff (30) die Form eines Henkels aufweist, der an den Seitenrändern des oberen Arms (3) seinen Ursprung hat und sich vor dem oberen Arm (3) erstreckt.

2. Elektrisches Haushaltsgerät zur kulinarischen Zubereitung nach Anspruch 1, **dadurch gekennzeichnet, dass** die Gelenkvorrichtung ein Verschwenken des oberen Arms (3) an dem unteren Arm (2) um eine Achse X' ermöglicht, die parallel zur Arbeitsebene ist, und dass der Griff (30) sich in einer Ebene parallel zu der Achse X' erstreckt.

3. Elektrisches Haushaltsgerät zur kulinarischen Zubereitung nach einem der Ansprüche 1 bis 2, **dadurch gekennzeichnet, dass** der Griff (30) sich zumindest über eine Seite des oberen Armes (3) erstreckt.

4. Elektrisches Haushaltsgerät zur kulinarischen Zubereitung nach einem der Ansprüche 1 bis 3, **dadurch gekennzeichnet, dass** der untere Arm (2) mit der Basis (1) durch eine erste Gelenkvorrichtung verbunden ist, und dass der obere Arm (3) mit dem unteren Arm (2) durch eine zweite Gelenkvorrichtung verbunden ist.

5. Elektrisches Haushaltsgerät zur kulinarischen Zubereitung nach Anspruch 4, **dadurch gekennzeichnet, dass** die ersten und zweiten Gelenkvorrichtungen Mittel zu Verriegelung umfassen, die es ermöglichen, den unteren (2) und oberen (3) Arm in mindestens einer vorgegebenen Position zu immobilisieren.

6. Elektrisches Haushaltsgerät zur kulinarischen Zubereitung nach einem der Ansprüche 4 bis 5, **dadurch gekennzeichnet, dass** die erste Gelenkvorrichtung eine Schwenkbewegung des unteren Armes (2) auf der Basis (1) um eine Y-Achse, die vertikale genannt wird, senkrecht zu der Arbeitsebene ermöglicht.

7. Elektrisches Haushaltsgerät zur kulinarischen Zubereitung nach einem der Ansprüche 1 bis 6, **dadurch gekennzeichnet, dass** der obere Arm (3) eine gefaltete Position einnehmen kann, in welcher der obere Arm (3) entlang des unteren Arms (2) anliegt.

8. Elektrisches Haushaltsgerät zur kulinarischen Zubereitung nach Anspruch 7, **dadurch gekennzeichnet, dass** der untere Arm (2) eine Durchgangsöffnung (21) umfasst, die es ermöglicht, auf den Antrieb (42) zuzugreifen, wenn der obere Arm (3) die gefaltete Position einnimmt.

9. Haushaltsgerät zur kulinarischen Zubereitung nach einem der Ansprüche 7 bis 8, **dadurch gekennzeichnet, dass** der untere Arm (2) und der obere Arm (3) eine Arbeitsposition im rechten Winkel, in welcher der untere Arm (2) im Wesentlichen vertikal angeordnet ist und der obere Arm (3) im Wesentlichen senkrecht zu dem unteren Arm (2) angeordnet ist, und mindestens eine vertikale Arbeitsposition einnehmen können, in welcher der untere Arm (2) im Wesentlichen vertikal angeordnet ist und der obere Arm (3) die gefaltete Position einnimmt.

10. Elektrisches Haushaltsgerät zur kulinarischen Zubereitung nach Anspruch 9, **dadurch gekennzeichnet, dass** es ein als herausnehmbares Gehäuse (9) ausgebildetes Untersetzungsgetriebe umfasst, das eine Eingangswelle (93) umfasst, die an den Antrieb (42) angekoppelt ist, wenn der obere Arm (3) die vertikale Arbeitsposition einnimmt.

11. Elektrisches Haushaltsgerät zur kulinarischen Zubereitung nach einem der Ansprüche 1 bis 10, **dadurch gekennzeichnet, dass** der Motor (4) in dem oberen Arm (3) vorzugsweise quer zu dem letzteren angeordnet ist.

12. Elektrisches Haushaltsgerät zur kulinarischen Zubereitung nach Anspruch 11, **dadurch gekennzeichnet, dass** der obere Arm (3) eine ersten Antrieb (42), der auf einer unteren Seite des oberen Armes (3) mündet, und einen zweiten Antrieb (41) umfasst, der auf einer oberen Seite des oberen Armes (3) mündet.

13. Elektrisches Haushaltsgerät zur kulinarischen Zubereitung nach Anspruch 12, **dadurch gekennzeichnet, dass** der erste Antrieb (42) von den Motor (4) über ein Untersetzungsgetriebe angetrieben wird, und dass der zweite Antrieb (41) in direktem Kontakt mit einer Ausgangswelle des Motors (4) ist.

## Claims

1. Household food preparation appliance comprising a base (1) intended to be placed flat on a work surface, a lower arm (2) borne by the base (1) and an upper arm (3) comprising a rear end connected to the lower arm (2) by a hinge means, the upper arm (3) comprising at least one drive mechanism (42) driven in rotation by a motor (4) and intended to be coupled to a food processing accessory, the upper arm (3) comprises a gripping handle (30) extending at least partially in front of a front end of the upper arm (3), **characterised in that** the handle (30) has that shape of a loop that begins on the lateral edges of the upper arm (3) and extending in front of the upper arm (3).

2. Household food preparation appliance according to claim 1, **characterised in that** said hinge means allow for a pivoting of the upper arm (3) on the lower arm (2) about an axis X' parallel to the work surface and **in that** the handle (30) extends in a plane parallel to the axis X'.

3. Household food preparation appliance according to any of claims 1 to 2, **characterised in that** the handle (30) extends over at least one side of the upper arm (3).

4. Household food preparation appliance according to any of claims 1 to 3, **characterised in that** the lower arm (2) is connected to the base (1) by a first hinge means and the upper arm (3) is connected to the lower arm (2) by a second hinge means.

5. Household food preparation appliance according to claim 4, **characterised in that** the first and second hinge means comprise means for locking that make it possible to immobilise the lower (2) and upper (3) arms in at least one predetermined position.

6. Household food preparation appliance according to any of claims 4 to 5, **characterised in that** said first hinge means allows for a pivoting movement of the lower arm (2) on the base (1) about a so-called vertical axis Y, perpendicular to the work surface.

7. Household food preparation appliance according to any of claims 1 to 6, **characterised in that** the upper arm (3) can occupy a folded position, wherein the upper arm (3) is placed along the lower arm (2).

8. Household food preparation appliance according to claim 7, **characterised in that** the lower arm (2) comprises a through-opening (21) making it possible to access the driver (42) when the upper arm (3) occupies the folded position.

9. Household food preparation appliance according to any of claims 7 to 8, **characterised in that** the lower arm (2) and the upper arm (3) can occupy a working position as a square wherein the lower arm (2) is arranged substantially vertically and the upper arm (3) is arranged substantially perpendicularly to the lower arm (2) and at least one vertical working position wherein the lower arm (2) is arranged substantially vertically and the upper arm (3) occupies the folded position.

10. Household food preparation appliance according to claim 9, **characterised in that** it comprises a removable case (9), speed reducer, comprising an input shaft (93) that coupled with the driver (42) when the upper arm (3) occupies the vertical working position.

11. Household food preparation appliance according to any of claims 1 to 10, **characterised in that** the motor (4) is arranged in the upper arm (3), preferably transversally to the latter.

12. Household food preparation appliance according to claim 11, **characterised in that** the upper arm (3) comprises a first driver (42) opening onto a lower face of the upper arm (3) and a second driver (41) opening onto an upper face of the upper arm (3).

13. Household food preparation appliance according to claim 12, **characterised in that** the first driver (42) is driven by the motor (4) through a speed reducer, with the second driver (41) being directly engaged with an output shaft of the motor (4).
